# EUROPÄISCHE PATENTSCHRIFT

(11) **EP 1 809 989 B1**
(45) Veröffentlichungstag und Bekanntmachung des Hinweises auf die Patenterteilung: **04.01.2012**
(21) Anmeldenummer: 05803214.5
(22) Anmeldetag: 02.11.2005
(51) Int. Cl.: G01D 5/48, B60C 23/04

(54) **MESSSYSTEM MIT ROTIERENDER ERFASSUNGSEINRICHTUNG INSBESONDERE FÜR EINEN MOTOR ODER EINEN GENERATOR**
MEASURING SYSTEM COMPRISING A ROTATING DETECTION DEVICE ESPECIALLY FOR USE IN A MOTOR OR A GENERATOR
SYSTEME DE MESURE COMPRENANT UN DISPOSITIF D'ACQUISISTION POUVANT TOURNER, UTILISE, EN PARTICULIER, POUR UN MOTEUR OU UN GENERATEUR

(30) Priorität: 11.11.2004 DE 102004054581
(43) Veröffentlichungstag der Anmeldung: 25.07.2007
(73) Patentinhaber: SIEMENS AKTIENGESELLSCHAFT, 80333 München (DE)
(72) Erfinder: CHRISTIAN, Karsten, 13355 Berlin (DE); EL FALAKI, Mahmoud-Adel, 14624 Seeburg (DE); HAUPTMANN, Roland, 10585 Berlin (DE); HÜBNER, Lutz, 14165 Berlin (DE); ZWARG, Günter, 14052 Berlin (DE)
(86) Internationale Anmeldenummer: PCT/EP2005/055693
(87) Internationale Veröffentlichungsnummer: WO 2006/051055

(56) Entgegenhaltungen:
- EP-A- 1 434 185
- WO-A-03/004975
- US-A1- 2004 130 442
- US-A1- 2004 173 014
- US-B1- 6 199 575

## Beschreibung

Die vorliegende Erfindung beschreibt einen Motor oder Generator umfassend eine Auswerteeinrichtung mit einer ersten Übertragungseinrichtung und eine Erfassungseinrichtung, welche in Bezug auf die Auswerteeinrichtung um eine Achse rotierbar ist, mit einer zweiten Übertragungseinrichtung, wobei Daten von der zweiten Übertragungseinrichtung zur ersten Übertragungseinrichtung bei einer Rotation der Erfassungseinrichtung drahtlos übertragbar sind. Die Erfindung betrifft weiterhin einen Motor, einen Generator oder ein Kraftfahrzeug mit einem derartigen Messsystem.

Für das Betreiben von Motoren, Generatoren oder anderer sich drehenden Einrichtungen kann es von Vorteil sein, wenn diese über ein Messsystem zur Erfassung und zur Auswertung von Messdaten aus ihrem Inneren verfügen. Bei den Messdaten kann es sich beispielsweise um Daten bezüglich der Temperatur, einer Dehnung und/oder eines Drehmoments von einzelnen Komponenten des Motors oder des Generators handeln. Werden diese Messdaten gezielt erfasst und ist eine schnelle Reaktion auf sie möglich, so kann das Auftreten eines Schadens vermieden oder die Steuerung des Motors hinsichtlich einer besseren Leistung realisiert werden.

Um ein gutes Erfassen der Messdaten zu ermöglichen, muss eine Erfassungseinrichtung in/an der drehenden Komponente des jeweiligen Motors oder Generators angebracht werden. Wird beispielsweise ein Motor aktiviert, so rotiert auch die eingebaute Erfassungseinrichtung. Aus diesem Grund muss die Erfassungseinrichtung so ausgelegt sein, dass sich ihre Funktion auch im rotierenden Zustand ausführen lässt.

Da aus Platzgründen darauf verzichtet werden muss, auch eine Auswerteeinrichtung zur Auswertung der erfassten physikalischen Größen im Inneren des Motors anzubringen, muss das Messsystem über eine Datenübertragungsvorrichtung verfügen, mit der die von der Erfassungseinrichtung erfassten Messdaten an die Auswerteeinrichtung übertragen werden können. Zu diesem Zweck umfasst die Auswerteeinrichtung eine erste Übertragungseinrichtung und die Erfassungseinrichtung eine zweite Übertragungseinrichtung, wobei die zweite Übertragungseinrichtung bei Betreiben des Motors mit der Erfassungseinrichtung um eine Achse rotiert. Die zweite Übertragungseinrichtung ist üblicherweise so ausgerichtet, dass sie sowohl im unbewegten Zustand als auch im rotierenden Zustand ein Datensignal an die erste Übertragungseinrichtung aussenden kann.

Die Übertragung von Messsignalen von einer rotierenden Erfassungseinrichtung zu einer ruhenden Auswerteeinrichtung wird nach dem Stand der Technik mit meist synchron arbeitenden, unidirektionalen Übertragungssystemen realisiert. Dabei ist das verwendete Datenübertragungssystem ein für fast jeden Einsatzfall speziell bemessenes und gefertigtes Hochfrequenz-Übertragungssystem. Dieses muss beispielsweise bei rotierenden Bauteilen der Bauteilgröße und dem Bauteildurchmesser des Motors angepasst werden, was einen größeren Konstruktions-, Fertigungs- und Montageaufwand bewirkt. Zusätzlich ist die Datenübertragung von der zweiten Übertragungseinrichtung zu der ersten Übertragungseinrichtung über ein hochfrequentes Signal sehr störanfällig gegenüber elektromagnetischen Feldern. Dies hat zur Folge, dass die Reichweite des Übertragungssystems stark eingeschränkt ist. Daraus ergibt sich die Schwierigkeit, dass bei der Anordnung der Auswerteeinrichtung darauf geachtet werden muss, dass diese sich noch nahe genug an der Erfassungseinrichtung befindet um eine Datenübertragung von der Erfassungseinrichtung zur Auswerteeinrichtung zu gewährleisten.

Des Weiteren wirkt sich sehr einschränkend auf die Nutzung eines Messsystems nach dem Stand der Technik aus, dass die Erfassungseinrichtung während einer laufenden Messung nicht steuerbar ist, so dass eine schnelle Reaktion auf einen erfassten Zustand des Motors oder des Generators nicht möglich ist.

Aus der Druckschrift US 2004/0173014 A1 ist eine Radanordnung mit einem Drucksensor bekannt. Der Drucksensor dient zur Messung des Reifendrucks. Ein Kommunikationssystem überträgt Messsignale des Sensors von der Narbe zur Welle. Die übertragungseinrichtung arbeitet bei einer Frequenz über 50kHz und besitzt ringförmige, konzentrische Antennen innerhalb der Welle. Die übertragung kann bidirektional erfolgen und es kann auch die für den Sensor notwendige Energie mit einem Übertragungssystem übertragen werden.

Darüber hinaus beschreibt die Patentschrift US 6 199 575 B1 ein Reifenventil mit einem Drucksensor für ein Fahrzeug. Auch hier besteht eine bidirektionale, drahtlose Verbindung zwischen einem Übertragungsgerät in einem Fahrzeug und dem Sensor.

Ferner offenbart die Druckschrift WO 03/004975 A1 ein intelligentes Mikrosensormodul. Es besitzt neben einem Bensormodul auch eine Kommunikationsschnittstelle, die nach dem WLAN Standard betrieben werden kann.

Die Aufgabe der vorliegenden Erfindung liegt deshalb darin, einen Motor oder Generator zu finden, bei dem Daten aus einem rotierenden System besser gewonnen und verwertet werden können. Die Druckschrift US 6 415 439 B1 offenbart einen Motor nach der Präambel von Anspruch 1. Erfindungsgemäß wird diese Aufgabe gelöst durch einen Motor oder Generator nach Anspruch 1.

Dabei liegt der Erfindung die Erkenntnis zugrunde, dass ein Ansteuern der Erfassungseinrichtung und damit eine Reaktion des Messsystems auf einen erfassten Zustand dadurch gewährleistet werden kann, dass eine bidirektionaler Datenübertragung über die erste und die zweite Übertragungseinrichtung möglich ist. Dadurch kann, neben einer Übertragung von Messdaten von der Erfassungseinrichtung auf die Auswerteeinrichtung auch eine Übertragung von Steuersignalen von der Auswerteeinrichtung auf die Erfassungseinrichtung stattfinden. Da die von der Erfassungseinrichtung erfassten Messdaten von der Auswerteeinrichtung ausgewertet werden, registriert die Auswerteeinrichtung auch schnell einen gewissen Zustand des Motors oder Generators. Dadurch kann auch von der Auswerteeinrichtung innerhalb eines kurzen Zeitintervalls ein dem erfassten Zustand entsprechendes Steuersignals an die Erfassungseinrichtung ausgesendet werden. Durch das Ansteuern der Erfassungseinrichtung kann beispielsweise eine Verstärkung variiert werden, so dass eine Übertragungsbandbreite bzw. ein digitaler Wertebereich besser ausgenutzt werden kann.

Vorzugsweise ist über die erste Übertragungseinrichtung und die zweite Übertragungseinrichtung eine digitale und/oder asynchrone Datenübertragung möglich. Dabei kann das Messsystem auf der Basis eines WLAN-Übertragungssystems und/oder eines Bluetooth-Übertragungssystems oder eines anderen digitalen Datenübertragungssystems ausgelegt sein. Ein derartiges Datenübertragungssystem muss nicht für jeden Anwendungsfall speziell bemessen und gefertigt werden, da man hierbei ein herkömmliches WLAN- oder Bluetooth-Übertragungssysteme verwenden kann. Hierbei ergibt sich der weitere Vorteil, dass die Bauteilgröße der WLAN- und Bluetooth-Komponenten gegenüber konventionellen Lösungen zur Datenübertragung zwischen einer rotierenden Erfassungseinrichtung und einer nichtrotierenden Auswerteeinrichtung stark verringert ist. Dies wirkt sich positiv beim Einbau der Erfassungseinrichtung und der Auswerteeinrichtung. Zusätzlich liegen die Übertragungsraten zwischen den beiden Übertragungseinrichtungen dabei mit über 4 Mbit/s über den Raten konventioneller Systeme zur Datenübertragung von einer rotierenden zu einer nicht rotierenden Übertragungseinrichtung. Auch die Übertragungsstrecke eines WLAN- oder Bluetooth-Systems kann bis zu 1000-fach größer als bei konventionellen Datenübertragungssystemen sein. Dies ist von Vorteil, da die ruhende Auswerteeinrichtung sich somit außerhalb der Anlage/Maschine befinden kann, ohne dass die Datenübertragung gestört wird. Dadurch werden komplizierte Einbauten und Schutzgehäuse für die ruhende Auswerteeinrichtung gegenstandslos und die Herstellungskosten für einen Motor oder einen Generator mit einem erfindungsgemäßen Messsystem können deutlich reduziert werden. Des Weiteren ist eine behördliche Funkgenehmigung für ein auf WLAN oder Bluetooth basierendes Messsystem nicht erforderlich.

Vorteilhafterweise kann bei dem Messsystem mindestens ein Teilbetrag einer Versorgungsenergie der Erfassungseinrichtung drahtlos von der Auswerteeinrichtung auf die Erfassungseinrichtung übertragbar sein. Dies ermöglicht neben einer gutfunktionierenden Datenübertragung auch eine sichere, verschleißfreie Spannungsversorgung für die um eine Achse rotierende Erfassungseinrichtung.

Beispielsweise besitzen die Erfassungseinrichtung und die Auswerteeinrichtung je eine Spule zu einer induktiven Übertragung von mindestens einem Teilbetrag der Versorgungsenergie der Erfassungseinrichtung. Damit bietet sich eine einfache und billig zu realisierende Lösung zur kontaktlosen Energieversorgung der um eine Achse rotierenden Erfassungseinrichtung an. Eine Eigen- und/oder Fremdversorgung der Erfassungseinrichtung ist dadurch nicht ausgeschlossen.

Die vorgestellten Übertragungseinrichtungen zur bidirektionalen Datenübertragung lassen sich auch für einen Motor oder einen Generator mit einem Messsystem nutzen. Ebenso für ein Kraftfahrzeug mit einem derartigen Messsystem, wie es oben beschrieben wurde, ergeben sich aus der Anwendung viele Vorteile. Auf diese Weise lässt sich beispielsweise eine schnelle Reaktion auf die innerhalb eines Motors, eines Generators, eines Getriebes, eines Bremssystems oder dergleichen erfassten physikalischen Größen realisieren. Dies kann zur Vermeidung von Schäden und zur Steigerung der Leistung dieser Komponenten dienen.

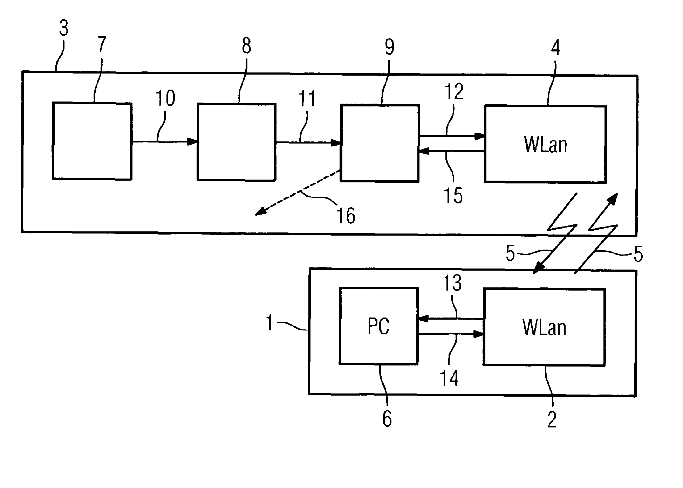

Die vorliegende Erfindung wird nun anhand der beigefügten Zeichnung FIG 1 näher erläutert, in welcher ein erfindungsgemäßes Messsystem umfassend zwei Übertragungseinrichtungen zur bidirektionalen Übertragung gezeigt ist.

Das nachfolgend näher beschriebene Ausführungsbeispiel stellt eine bevorzugte Ausführungsform der vorliegenden Erfindung dar.

In FIG 1 ist ein erfindungsgemäßes Messsystem für einen Motor dargestellt mit einer Auswerteeinrichtung 1 und einer Erfassungseinrichtung 3. Analog zu dem Beispiel aus FIG 1 ließe sich aber auch ein Messsystem für einen Generator oder andere Maschinen mit Drehkomponente darstellen.

Die Auswerteeinrichtung 1 ist außerhalb des in FIG 1 nicht dargestellten Motors angeordnet. Die Erfassungseinrichtung 3 befindet sich innerhalb des Motors und führt bei dessen Betreiben eine Rotationsbewegung um die Motorachse durch. In FIG 1 wurde auf eine Skizzierung der unterschiedlichen Anbringungspositionen der Auswerteeinrichtung 1 und der Erfassungseinrichtung 3 verzichtet.

Sowohl die Auswerteeinrichtung 1 als auch die Erfassungseinrichtung 3 besitzen je eine Übertragungseinrichtung 2 und 4. Daneben umfasst die Auswerteeinrichtung 1 noch einen PC 6. Zu der Erfassungseinrichtung 3 gehören außerdem noch eine Sensoreinrichtung 7, eine Messsignalverstärker-Einrichtung 8 und ein Mikro-Rechner 9. Des Weiteren umfassen Auswerteeinrichtung 1 und Erfassungseinrichtung 3 noch Einrichtungen zu ihrer Energieversorgung, welche allerdings in FIG 1 nicht skizziert sind. So kann die Erfassungseinrichtung 3 beispielsweise eine Batterie umfassen. Als mögliche Alternative bietet sich aber auch eine induktive Primärspule innerhalb der Auswerteeinrichtung 1 und eine induktive Sekundärspule innerhalb der Erfassungseinrichtung 3 zur Spannungsversorgung der rotierenden Erfassungseinrichtung 3 an.

Über die Sensoreinrichtung 7 der Erfassungseinrichtung 3 wird mindestens eine physikalische Größe des Motors wie beispielsweise die Temperatur, das Drehmoment oder Dehnungen von einzelnen Komponenten des Motors erfasst. In Abhängigkeit der mindestens einen erfassten physikalischen Größe gibt die Sensoreinrichtung 7 dann ein erstes Sensorsignal 10 an die Messsignalverstärker-Einrichtung 8 aus. Die Messsignalverstärker-Einrichtung 8 stellt daraufhin ein entsprechendes Verstärkersignal 11 an den Mikro-Rechner 9 bereit.

Über den Mikro-Rechner 9 wird die zweite Übertragungseinrichtung 4 zur Aussendung eines Signals gesteuert. Dies geschieht über ein Mikro-Rechner-Sendesignal 12, welches entsprechend einem erfassten Verstärkersignal 11 vom Mikro-Rechner 9 an die zweite Übertragungseinrichtung 4 ausgegeben wird. Über die bidirektionale Datenübertragung 5 zwischen der zweiten Übertragungseinrichtung 4 und der ersten Übertragungseinrichtung 2 erhält der PC 6 ein PC-Empfangssignal 13, welches der von der Sensoreinrichtung 7 erfassten physikalischen Größe entspricht.

Die von der Sensoreinrichtung 7 erfasste physikalische Größe wird dann vom PC 6 ausgewertet. Dabei ist es möglich, dass der PC 6 entweder selbst auf einen bestimmten Zustand des Motors reagiert, oder dass er einem Anwender diesen mitteilt und daraufhin eine Befehlseingabe des Anwenders entgegen nimmt. In beiden Fällen gibt der PC 6 an die erste Übertragungseinrichtung 2 ein PC-Sendesignal 14 aus.

Über eine mehrkanalige, bidirektionale Datenübertragung 5 zwischen den beiden Übertragungseinrichtungen 2 und 4 ist es möglich, dass der Mikro-Rechner 9 ein dem PC-Sendesignal 14 entsprechendes Mikro-Rechner-Empfangssignal 15 erhält, ohne dass dazu die Übertragung der Messdaten von der Sensoreinrichtung 7 zum PC 6 über die einzelnen Komponenten 8,9,4 und 2 unterbrochen werden muss. Der Mikro-Rechner 9 gibt dann ein dem PC-Sendesignal 14 entsprechendes Steuersignal 16 aus.

In FIG 1 ist der dem Steuersignal 16 entsprechende Pfeil so gezeichnet, dass die Spitze auf keine Komponente der Erfassungseinrichtung 3 direkt deutet. Dies bedeutet, dass für das Steuersignal 16 mehrere Empfänger denkbar sind. Beispielsweise kann der Mikro-Rechner 9 ein Steuersignal 16 an die Sensoreinrichtung 7 oder an die Messsignalverstärker-Einrichtung 8 richten, um eine von beiden beispielsweise entsprechend einer Befehlseingabe eines Anwenders am PC 6 zu schalten. Möglich ist auch, dass das Steuersignal 16 an eine in FIG 1 nicht eingezeichnete Komponente der Erfassungseinrichtung 3 gerichtet wird. Des Weiteren ist auch eine Ausgabe des Steuerbefehls an eine von der Erfassungseinrichtung 3 nicht umfasste Vorrichtung innerhalb des Motors möglich.

## Patentansprüche

1. Motor oder Generator umfassend
- eine Auswerteeinrichtung (1) mit einer ersten Übertragungseinrichtung (2) und
- eine Erfassungseinrichtung (3) zur Erfassung von Daten bezüglich des Motors oder des Generators mit einer zweiten Übertragungseinrichtung (4), wobei eine bidirektionale Datenübertragung (5) zwischen der ersten Übertragungseinrichtung (2) und der zweiten Übertragungseinrichtung (4) gewährleistet ist,
- die Erfassungseinrichtung (3) über die Auswerteeinrichtung (1) steuerbar ist, **dadurch gekennzeichnet, dass**
- die Erfassungseinrichtung (3) in Bezug auf die Auswerteeinrichtung (1) um eine Drehachse des Motors oder des Generators rotierbar ist,
- Daten von der zweiten Übertragungseinrichtung (4) zur ersten Übertragungseinrichtung (2) bei einer Rotation der Erfassungseinrichtung (3) drahtlos übertragbar sind und
- von der Erfassungseinrichtung (3) ein Steuerbefehl (16) an eine von der Erfassungseinrichtung (3) nicht umfasste Vorrichtung innerhalb des Motors oder Generators abgebbar ist.

2. Motor oder Generator nach Anspruch 1, wobei über die erste (2) und die zweite Übertragungseinrichtung (4) eine digitale und/oder asynchrone Datenübertragung möglich ist.

3. Motor oder Generator nach Anspruch 1 oder 2, wobei die erste Übertragungseinrichtung (2) und die zweite Übertragungseinrichtung (4) ein WLAN-Übertragungssystem und/oder ein Bluetooth-Übertragungssystem umfassen,

4. Motor oder Generator nach Anspruch 1, 2 oder 3, wobei mindestens ein Teilbetrag einer Versorgungsenergie der Erfassungseinrichtung (3) drahtlos von der Auswerteeinrichtung (1) auf die Erfassungseinrichtung (3) übertragbar ist.

5. Motor oder Generator nach einem der Ansprüche 1 bis 4, wobei die Erfassungseinrichtung (3) und die Auswerteeinrichtung (1) je eine Spule zu einer induktiven Übertragung von mindestens einem Teilbetrag der Versorgungsenergie der Erfassungseinrichtung (3) umfassen.

6. Kraftfahrzeug mit einem Motor oder Generator nach einem der Ansprüche 1 bis 5.

## Claims

1. Motor or generator comprising
- an evaluation device (1) having a first transmission device (2) and
- an acquisition device (3) for acquiring data in respect of the motor or generator having a second transmission device (4), wherein a bidirectional data transmission (5) between the first transmission device (2) and the second transmission device (4) is ensured,
- the acquisition device (3) can be controlled via the evaluation device (1), **characterised in that**
- in relation to the evaluation device (1) the acquisition device (3) is rotatable about an axis of rotation of the motor or generator,
- data can be transmitted wirelessly from the second transmission device (4) to the first transmission device (2) during a rotation of the acquisition device (3) and
- a control command (16) can be output by the acquisition device (3) to a device inside the motor or generator which is not encompassed by the acquisition device (3).

2. Motor or generator according to claim 1, wherein a digital and/or asynchronous data transmission is possible by way of the first (2) and second transmission device (4).

3. Motor or generator according to claim 1 or 2, wherein the first transmission device (2) and the second transmission device (4) comprise a WLAN transmission system and/or a Bluetooth transmission system.

4. Motor or generator according to claim 1, 2 or 3, wherein at least a partial amount of power supply energy of the acquisition device (3) can be transmitted wirelessly from the evaluation device (1) to the acquisition device (3).

5. Motor or generator according to one of claims 1 to 4, wherein the acquisition device (3) and the evaluation device (1) each include a coil for inductive transmission of at least a partial amount of the power supply energy of the acquisition device (3).

6. Motor vehicle having a motor or generator according to one of claims 1 to 5.

## Revendications

1. Moteur ou générateur, comprenant
- un dispositif ( 1 ) d'exploitation ayant un premier dispositif ( 2 ) de transmission et
- un dispositif ( 3 ) d'acquisition pour l'acquisition de données se rapportant au moteur ou au générateur et ayant un deuxième dispositif ( 4 ) de transmission, dans lequel une transmission ( 5 ) bidirectionnelle des données est assurée entre le premier dispositif ( 2 ) de transmission et le deuxième dispositif ( 4 ) de transmission,
- le dispositif ( 3 ) d'acquisition peut être commandé par le dispositif ( 1 ) d'exploitation, **caractérisé en ce que**
- le dispositif ( 3 ) d'acquisition peut tourner, par rapport au dispositif ( 1 ) d'exploitation, autour d'un axe de rotation du moteur ou du générateur,
- des données peuvent être transmises sans fil du deuxième dispositif ( 4 ) de transmission au premier dispositif ( 2 ) de transmission, lors d'une rotation du dispositif ( 3 ) d'acquisition, et
- une instruction ( 16 ) de commande peut être émise à l'intérieur du moteur ou du générateur par le système ( 3 ) d'acquisition vers un système non compris par le dispositif ( 3 ) d'acquisition.

2. Moteur ou générateur suivant la revendication 1, dans lequel une transmission de données numérique et/ou asynchrone est possible par le premier dispositif ( 2 ) de transmission et le deuxième dispositif ( 4 ) de transmission.

3. Moteur ou générateur suivant la revendication 1 ou 2, dans lequel le premier dispositif ( 2 ) de transmission et le deuxième dispositif ( 4 ) de transmission comprennent un système de transmission WLAN et/ou un système de transmission Bluetooth.

4. Moteur ou générateur suivant la revendication 1, 2 ou 3, dans lequel au moins un montant partiel d'une énergie d'alimentation du dispositif ( 3 ) d'acquisition peut être transmis sans fil du dispositif ( 1 ) d'exploitation au dispositif ( 3 ) d'acquisition.

5. Moteur ou générateur suivant l'une des revendications 1 à 4, dans lequel le dispositif ( 3 ) d'acquisition et le dispositif ( 1 ) d'exploitation comprennent respectivement une bobine pour une transmission par induction d'au moins un montant partiel de l'énergie d'alimentation du dispositif ( 3 ) d'acquisition.

6. Véhicule automobile ayant un moteur ou un générateur suivant l'une des revendications 1 à 5.
